# EUROPEAN PATENT SPECIFICATION

(11) **EP 3 879 239 B1**
(45) Date of publication and mention of the grant of the patent: **18.10.2023**
(21) Application number: 19881698.5
(22) Date of filing: 25.10.2019
(51) Int. Cl.: G01F 15/063, G01F 3/22, G01M 3/28, G01F 15/00, G01F 1/66

(54) **GAS METER**
GASMESSGERÄT
COMPTEUR À GAZ

(30) Priority: 05.11.2018 JP 2018207847
(43) Date of publication of application: 15.09.2021
(73) Proprietor: Panasonic Intellectual Property Management Co., Ltd., Osaka-shi, Osaka 540-6207 (JP)
(72) Inventor: KAMIMURA, Takanori, Osaka-shi 540-6207 (JP); YASUDA, Kenji, Osaka-shi 540-6207 (JP); KOBA, Yasuo, Osaka-shi 540-6207 (JP); KAWAUCHI, Akiyoshi, Osaka-shi 540-6207 (JP); OMOTO. Yukihiro, Osaka-shi 540-6207 (JP)
(74) Representative: SSM Sandmair
(86) International application number: PCT/JP2019/042041
(87) International publication number: WO 2020/095732

(56) References cited:
- JP-A- H0 777 446
- JP-A- H0 777 447
- JP-A- H08 121 763
- JP-A- H08 121 763
- JP-A- 2003 050 177
- JP-A- 2009 097 948
- JP-A- 2009 097 948
- US-A1- 2005 246 112
- US-A1- 2017 152 648

## Description

### TECHNICAL FIELD

The present invention relates to a gas meter having a gas leak detection function.

### BACKGROUND ART

Conventionally, there is a gas meter that determines that there is a gas leak when a pressure drop is at a certain level or more with a shutoff valve closed (see, for example, PTL 1). Furthermore, there is also a gas meter that determines a gas leak based on a difference between an average flow rate in a closed state of a shutoff valve and an average flow rate in an open state of the shutoff valve (see, for example, PTL 2).

### Citation List

### Patent Literature

PTL 1: Unexamined Japanese Patent Publication No. H8-313322
PTL 2: Unexamined Japanese Patent Publication No. 2008-180741

Document US2017/152648 A1 discloses a fluid flow monitoring system including an ultrasonic sensor for generating measurement signals associated with respective ultrasonic signals propagating through the fluid in the lumen, a shut-off valve for blocking fluid flow in the lumen, and a controller.

### SUMMARY OF THE INVENTION

However, in a configuration in which a gas leak is determined by use of pressure as in a conventional gas meter, the rate of the pressure drop depends on a piping capacity on a downstream side. That is, when the piping capacity on the downstream side is small, it is possible to determine a gas leak in a short time because the rate of the pressure drop is high, but when the piping capacity on the downstream side is large, the rate of the pressure drop is low even if an amount of leakage is the same, and thus it is necessary to measure the pressure for a long time in order to improve the accuracy of determining a gas leak.

In addition, in the method of determining a gas leak by the flow rate as in a conventional gas meter, although the method does not depend on the piping capacity on the downstream side, the accuracy of determining a gas leak cannot be obtained in relation to an offset amount in the case of a minute leak, and there is a possibility of erroneous determination.

The present disclosure provides a gas meter capable of accurately detecting a minute leak in a short time.

A gas meter of the present disclosure is defined by claim 1.

With this configuration, it is possible to reliably determine a gas leak in a short time.

### BRIEF DESCRIPTION OF DRAWINGS

FIG. 1 is a configuration diagram of a gas meter according to a non-claimed example.
FIG. 2 is a flowchart relating to leak determination of the gas meter according to the non-claimed example.
FIG. 3 is a graph for describing settings of a pressure drop determination value used for the leak determination of the gas meter according to the non-claimed example.
FIG. 4 is a diagram for describing another method of setting the pressure drop determination value used for the leak determination of the gas meter according to the non-claimed example.
FIG. 5 is a flowchart relating to leak determination of a gas meter according to an exemplary embodiment.
FIG. 6A is a diagram illustrating a code conversion table of a flow rate difference value used for the leak determination of the gas meter according to the exemplary embodiment.
FIG. 6B is a diagram illustrating a code conversion table of a pressure difference value used for the leak determination of the gas meter according to the exemplary embodiment.
FIG. 6C is a diagram illustrating a composite code of a flow rate difference value code and a pressure difference value code used for the leak determination of the gas meter according to the exemplary embodiment.

### DESCRIPTION OF EMBODIMENTS

Hereinafter, a non-claimed example and an exemplary embodiment will be described with reference to the drawings.

### (Non-claimed example)

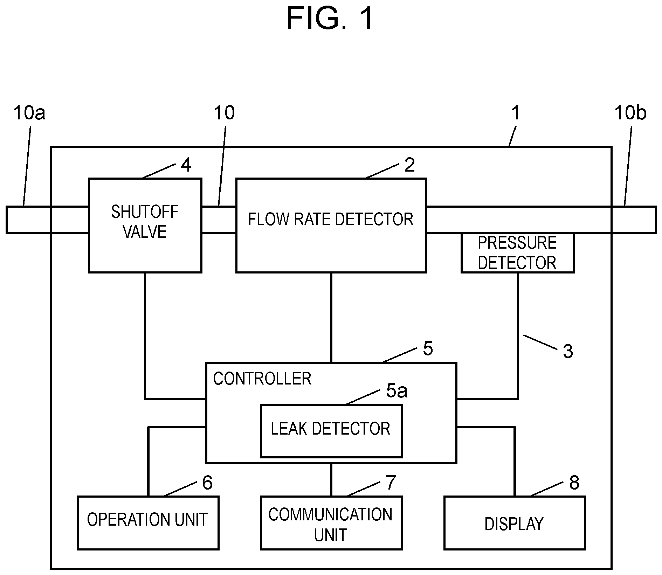

FIG. 1 illustrates a configuration diagram of a gas meter according to a non-claimed example.

As illustrated in FIG. 1, gas meter 1 includes flow path 10 through which gas flows, flow rate detector 2 that detects a flow rate value of the gas flowing in flow path 10, pressure detector 3 that detects a pressure value of the gas in flow path 10, and shutoff valve 4 that closes a part of flow path 10 to shut off a gas flow. Furthermore, gas meter 1 includes controller 5 that sends and receives signals to and from each component in gas meter 1 to control operation of each component, leak detector 5a, operation unit 6, communication unit 7, and display 8.

Flow path 10 is a gas flow path that communicates between meter inlet 10a and meter outlet 10b, and various gas appliances are connected downstream of gas meter 1, that is, downstream of meter outlet 10b, through a gas pipe (not illustrated).

Flow rate detector 2 detects the flow rate value of the gas flowing through flow path 10, that is, gas consumption of a gas appliance connected downstream of gas meter 1. Flow rate detector 2 is a flow rate detector that detects the flow rate value from the gas flow velocity measured based on propagation time of ultrasonic waves, or a flow rate detector that can detect the flow rate value from an instantaneous flow rate, such as a thermal type flow rate detector or a fluidic type flow rate detector, and a general flow rate detector can be used.

Pressure detector 3 detects the pressure value of the gas flowing through flow path 10, and is arranged on a downstream side from shutoff valve 4 to detect the pressure value downstream of gas meter 1.

Shutoff valve 4 shuts off the gas to ensure safety when an abnormal flow rate value is detected by flow rate detector 2 or when a gas leak is determined by leak detector 5a. As shutoff valve 4, a solenoid valve or a motor valve can be used.

Operation unit 6 performs operation for starting the opening and closing of shutoff valve 4 and the inspection of a gas leak.

Communication unit 7 can communicate with the outside to transmit an integrated value of the flow rate value of the gas detected by flow rate detector 2 or shut off the gas by shutoff valve 4 based on an instruction from a center device (not illustrated).

Controller 5 controls entire gas meter 1, such as integrating the flow rate value detected by flow rate detector 2 and displaying the integrated value on display 8, determining the presence or absence of an abnormality based on the flow rate value detected by flow rate detector 2, or opening and closing shutoff valve 4 based on the operation of operation unit 6. Controller 5 can be configured by a microcomputer.

Display 8 displays the integrated value of the flow rate value from controller 5 and a leak inspection result.

Leak detector 5a is incorporated as one function of controller 5, and has a function to determine, based on the flow rate value detected by flow rate detector 2 and the pressure value detected by pressure detector 3, the presence or absence of a gas leak from the downstream gas pipe, and the specific operation will be described later.

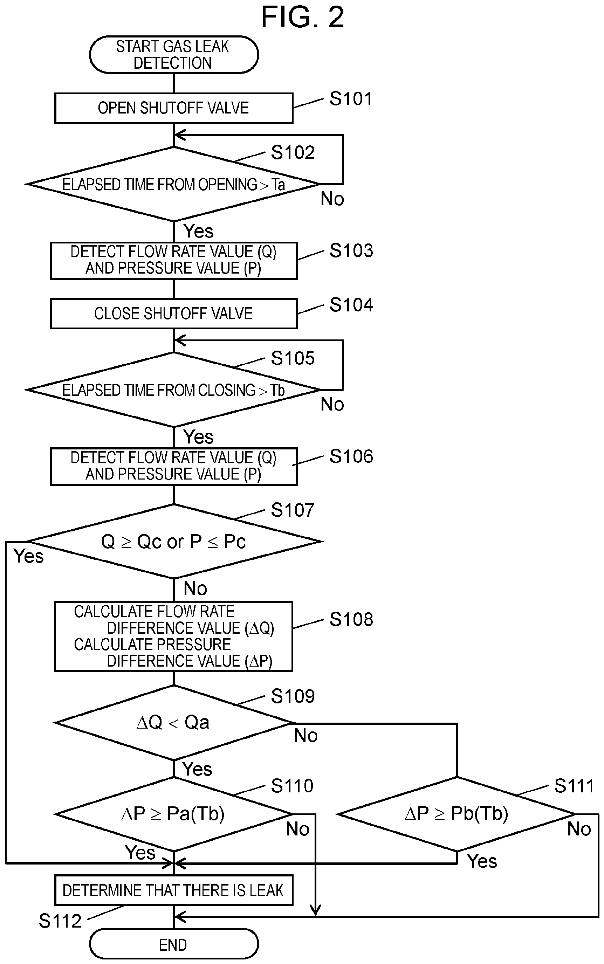

The operation and effect of gas meter 1 configured as described above will be described below with reference to a flowchart illustrated in FIG. 2.

When the detection of a gas leak is started by the operation or the like of operation unit 6, first, shutoff valve 4 is opened (step S101), and then it is determined that a predetermined time Ta (for example, three minutes) has elapsed (step S102). When the predetermined time Ta elapses, flow rate detector 2 detects a flow rate value (Q), pressure detector 3 detects a pressure value (P), and an average flow rate value (Q1) and an average pressure value (P1), which are average values of flow rate values (Q) and pressure values (P) respectively, are stored (step S103).

Note that, if shutoff valve 4 is already opened at the start of the leak detection, step S101 may be omitted.

Next, shutoff valve 4 is closed (step S104), and then it is determined that a predetermined time Tb (for example, three minutes) has elapsed from the closing (step S105). When the predetermined time Tb elapses, flow rate detector 2 detects a flow rate value (Q), pressure detector 3 detects a pressure value (P), and an average flow rate value (Q2) and an average pressure value (P2), which are average values of flow rate values (Q) and pressure values (P) respectively, are stored (step S106).

In order to determine the presence or absence of a gas leak, first, the presence or absence of a gas leak is determined by each of the detected flow rate value (Q) and pressure value (P) alone (step S107). Here, if the flow rate value (Q) is more than or equal to a leak determination flow rate value (Qc) that is clearly determined to be a gas leak, or if the pressure value (P) is less than or equal to a pressure drop determination value (Pc) that is clearly determined to be a gas leak (Yes in step S107), it is determined that there is a gas leak (step S112).

If it is not determined that there is a gas leak by the flow rate value (Q) or the pressure value (P) alone (No in step S107), a flow rate difference value (ΔΓa = Q2 - Q1) between the average flow rate value (Q1) when shutoff valve 4 is opened and the average flow rate value (Q2) after shutoff valve 4 is closed, and a pressure difference value (ΔP = P2 - P1) between the average pressure value (P1) when shutoff valve 4 is opened and the average pressure value (P2) after shutoff valve is closed are obtained (step S108).

If the flow rate difference value (ΔΓa) is less than a leak determination flow rate Qa (for example, 1.5 L/h) (Yes in step S109), it is determined whether the pressure difference value (ΔP) is more than or equal to a first pressure drop determination value Pa(Tb), that is, whether a drop in pressure value from the closing is more than or equal to Pa(Tb) (step S110). If the pressure difference value (ΔP) is more than or equal to the first pressure drop determination value Pa(Tb) (Yes in step S110), it is determined that there is a gas leak (step S112).

Furthermore, if the flow rate difference value (ΔΓa) is more than or equal to the leak determination flow rate Qa (No in step S109), it is determined whether the pressure difference value (ΔP) is more than or equal to a second pressure drop determination value Pb(Tb), that is, whether a pressure drop from the opening is more than or equal to Pb(Tb) (step S110). If the pressure difference value (ΔP) is more than or equal to the second pressure drop determination value Pb(Tb) (Yes in step S111), it is determined that there is a gas leak (step S112).

If there is no gas leak, the flow rate difference value (ΔΓa) is originally zero, and thus the flow rate difference value (ΔΓa) is a gas leak flow rate detected by gas meter 1. However, there is a possibility of erroneous determination if the determination is made only by this flow rate difference value (ΔQ), depending on the detection accuracy of flow rate detector 2. Therefore, in the present non-claimed example, the presence or absence of a gas leak is determined by the above procedure to reliably determine a gas leak.

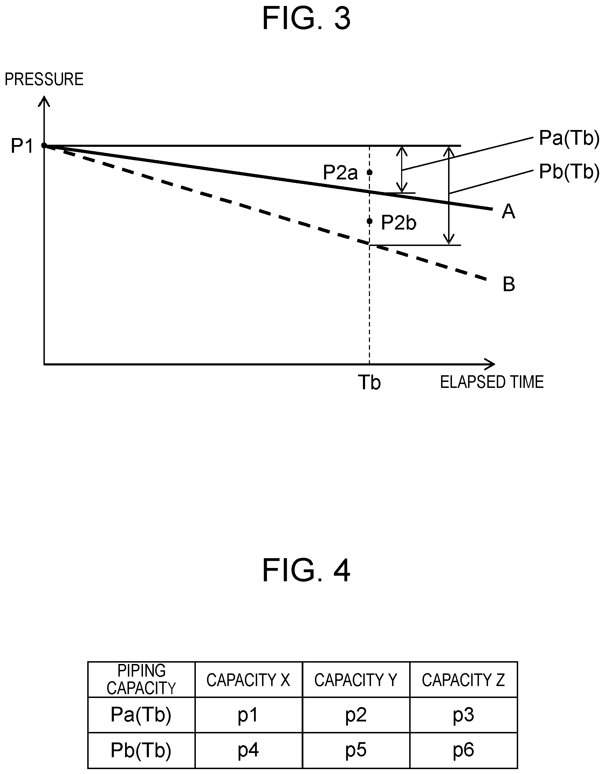

Here, the first pressure drop determination value Pa(Tb) and the second pressure drop determination value Pb(Tb) are determination values of pressure value drops after the predetermined time Tb has elapsed from the opening, and are values preset by the flow rate value and the elapsed time. A method of setting the first pressure drop determination value Pa(Tb) and the second pressure drop determination value Pb(Tb) will be described with reference to FIG. 3.

FIG. 3 is a schematic diagram of a graph illustrating a drop in pressure value with the passage of time from the initial pressure value P1 in the case of the leak determination flow rate value Qa and a flow rate value Qb (Qb> Qa). Line A illustrates the case of the leak determination flow rate Qa, and line B illustrates the case of the flow rate Qb.

As illustrated in FIG. 3, for the pressure value detected after the predetermined time Tb has elapsed from the closing, a leak determination value is set according to the flow rate (step S109 in FIG. 2), and in the case of P2a in FIG. 3, the first pressure drop determination value Pa(Tb) is selected as the pressure drop determination value, so that the leak determination is performed (step S110 in FIG. 2). Furthermore, in the case of P2b in FIG. 3, the second pressure drop determination value Pb(Tb) is selected as the pressure drop determination value, so that the leak determination is performed (step Sill in FIG. 2).

As described above, in the present exemplary embodiment, the pressure drop determination value is selected according to the flow rate, so that accurate leak determination can be performed in a short time.

Furthermore, in the present non-claimed example, two pressure drop determination values, the first pressure drop determination value Pa(Tb) and the second pressure drop determination value Pb(Tb), are selected with the leak determination flow rate Qa as a threshold value, but the pressure drop determination value may be defined as a function of the leak determination flow rate Qa.

Furthermore, when a leak occurs, the pressure drop after the opening depends on a piping capacity downstream of the gas meter, and thus the determination accuracy of the gas leak detection can be further improved if the first pressure drop determination value Pa(Tb) and the second pressure drop determination value Pb(Tb) are not fixed values but can be selected from a plurality of values according to an estimated piping capacity.

That is, as illustrated in FIG. 4, the range of a piping capacity of a building where gas meter 1 is installed can be divided into capacity X, capacity Y, and capacity Z, and values (p 1 to p6) of the first pressure drop determination value Pa(Tb) and the second pressure drop determination value Pb(Tb) can be set according to each piping capacity.

Note that, in the present non-claimed example, the first pressure drop determination value Pa(Tb) and the second pressure drop determination value Pb(Tb) are selected as pressure determination values according to the flow rate value, but step Sill illustrated in FIG. 2 may be omitted, the pressure drop determination may be performed only in the case where the flow rate difference value (ΔΓa) is less than the leak determination flow rate Qa, and it may be determined that there is a gas leak in the case where the flow rate difference value (ΔΓa) is more than or equal to the leak determination flow rate Qa.

In the present non-claimed example, the gas leak detection is started by the operation of operation unit 6, but operation unit 6 may be provided with a dedicated switch for starting the gas leak detection and this switch may be operated to start the gas leak detection, or operation by a combination of switches for opening and closing shutoff valve 4 may start the gas leak detection. Furthermore, the gas leak detection may be started periodically at a preset time. In addition, communication unit 7 may be instructed by a message from an external setting device or the like. Moreover, a time zone in which the gas is not used may be determined from the flow rate value detected by flow rate detector 2, and the gas leak detection may be automatically started periodically in the time zone in which the gas is not used.

As described above, in the present non-claimed example, leak detector 5a is configured to determine the presence or absence of a leak from the flow rate value detected by flow rate detector 2 and the pressure value detected by pressure detector 3, so that it is possible to reliably determine a gas leak in a short time.

### (Exemplary embodiment)

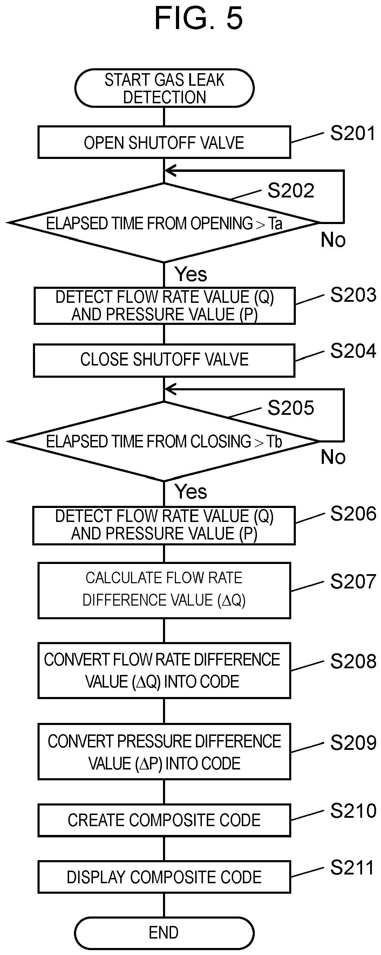

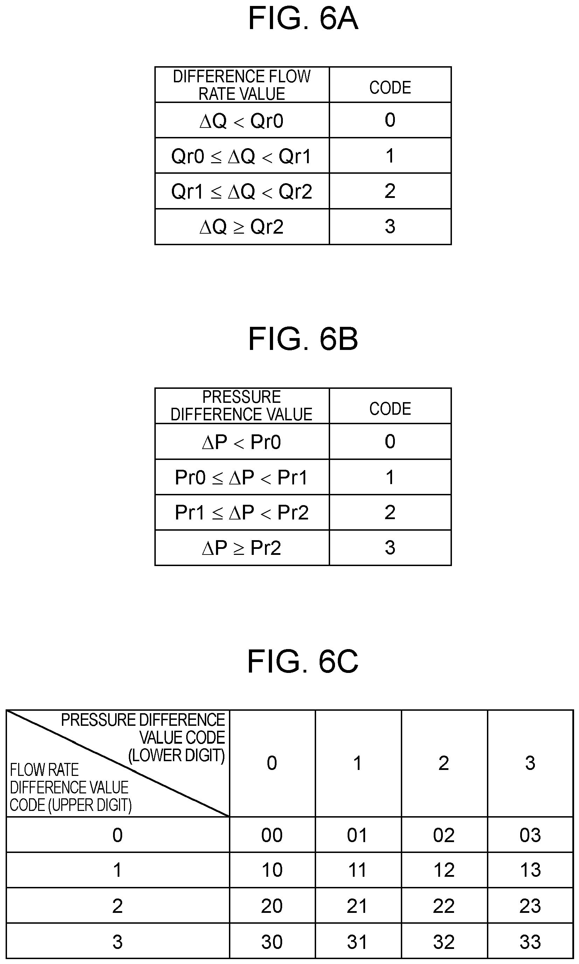

Next, a gas meter according to an exemplary embodiment will be described with reference to a flowchart illustrated in FIG. 5 and code conversion tables in FIGS. 6A to 6C. Note that a configuration of the gas meter according to the present exemplary embodiment is similar to the configuration illustrated in FIG. 1 used in the non-claimed example, and the description thereof will be omitted.

As illustrated in FIG. 5, when the gas leak detection is started by operation or the like of operation unit 6, first, shutoff valve 4 is opened (step S201), and then it is determined that a predetermined time Ta (for example, three minutes) has elapsed (step S202). When the predetermined time Ta elapses, flow rate detector 2 detects a flow rate value (Q), pressure detector 3 detects pressure (P), and an average flow rate value (Q1) and an average pressure value (P1), which are average values of flow rate values (Q) and pressure values (P) respectively, are stored (step S203).

Note that, if shutoff valve 4 is already opened at the start of the leak detection, processing S201 may be omitted.

Next, shutoff valve 4 is closed (step S204), and then it is determined that a predetermined time Tb (for example, three minutes) has elapsed from the closing (step S205). When predetermined time Tb elapses, flow rate detector 2 detects a flow rate (Q), pressure detector 3 detects pressure (P), and an average flow rate value (Q2) and an average pressure value (P2), which are average values of flow rate values (Q) and pressure values (P) respectively, are stored (step S206).

A flow rate difference value (ΔΓa = Q2 - Q1) between the average flow rate value (Q 1) when shutoff valve 4 is opened and the average flow rate value (Q2) after shutoff valve 4 is closed, and a pressure difference value (ΔP = P2 - P1) between the average pressure value (P1) when shutoff valve 4 is opened and the average pressure value (P2) after shutoff valve is closed are then obtained (step S207).

Next, the flow rate difference value (ΔΓa) is converted into a code by a code conversion table illustrated in FIG. 6A. That is, depending on the value to which the flow rate difference value (ΔΓa) belongs, a code "0" is given if the value is less than Qr0 (for example, 1.5 L/h), a code "1" is given if the value is more than or equal to Qr0 and less than Qr1 (for example 4.5 L/h), a code "2" is given if the value is more than or equal to Qr1 and less than Qr2 (for example, 10.0 L/h), and a code "3" is given if the value is more than or equal to Qr2 (step S208).

Similarly, the pressure difference value (ΔP) is converted into a code by a code conversion table illustrated in FIG. 6B. That is, depending on the value to which the pressure difference value (ΔP) belongs, a code "0" is given if the value is less than Pr0 (for example, 10 mbar), a code "1" is given if the value is more than or equal to Pr0 and less than Pr1 (for example, 20 mbar), a code "2" is given if the value is more than or equal to Pr1 and less than Pr2 (for example, 40 mbar), and a code "3" is given if the value is more than or equal to Pr2 (step S209).

Next, as illustrated in FIG. 6C, a two-digit composite code with the obtained code of the flow rate difference value (ΔΓa) as an upper digit and the pressure difference value (ΔP) as a lower digit is created (step S210) and displayed on display 8 (step S211).

As described above, according to the present exemplary embodiment, the composite code displayed on display 8 is confirmed, so that the presence or absence and state of a leak can be confirmed.

That is, if the composite code is "00", it can be determined that no leak has occurred, if the composite code is "33", it can be determined that a leak has clearly occurred and the use of a gas appliance can be prohibited, and if the composite code is a code other than these codes, it is possible to determine whether the gas appliance can be used according to the composite code, the installation status, and the like.

Note that, in the present exemplary embodiment, each of the flow rate difference value (ΔΓa) and the pressure difference value (ΔP) is divided into four according to their values to be given four codes, but each of the flow rate difference value (ΔΓa) and the pressure difference value (ΔP) is only required to be divided into at least two or more to be given codes.

Furthermore, as in the non-claimed example, a dedicated switch for starting the leak detection may be provided and this switch may be operated to start the leak detection, or operation by a combination of switches for opening and closing shutoff valve 4 may start the gas leak detection. In addition, the leak detection may be started periodically at a preset time. Moreover, communication unit 7 may be instructed to start the leak detection by a message from an external setting device or the like. Furthermore, a time zone in which the gas is not used may be determined from the flow rate detected by flow rate detector 2, and the leak detection may be automatically started periodically in the time zone in which the gas is not used.

### INDUSTRIAL APPLICABILITY

As described above, a gas meter according to the present disclosure is configured to determine the presence or absence of a leak from a flow rate value and a pressure value, and thus can be applied not only to household gas meters but also to commercial gas meters.

### REFERENCE MARKS IN THE DRAWINGS

- 1: gas meter
- 2: flow rate detector
- 3: pressure detector
- 4: shutoff valve
- 5: controller
- 5a: leak detector
- 6: operation unit
- 7: communication unit
- 8: display

## Claims

1. A gas meter (1) comprising:
a flow rate detector (2) configured to detect a flow rate value of gas;
a shutoff valve (4) configured to shut off the gas;
a pressure detector (3) configured to detect a pressure value of the gas; and
a leak detector (5a) configured to
- detect a first flow rate value, a first pressure value and a first average flow rate value Q1 and a first average pressure value P1, which are average values of first flow rate values and first pressure values, respectively, after a predetermined time has elapsed since opening of the shutoff valve (4),
- detect a second flow rate value, a second pressure value and a second average flow rate value Q2 and a second average pressure value P2, which are average values of second flow rate values and second pressure values, respectively, after a predetermined time has elapsed since closing of the shutoff valve (4),
- calculate a flow rate difference value ΔQ = Q2 - Q1 and a pressure difference value ΔP = P2 - P1, and
- determine a gas leak if the flow rate difference value ΔQ is less than a leak determination flow rate Qa and the pressure difference value ΔP is more than or equal to a first pressure drop determination value Pa or if the flow rate difference value ΔQ is more than or equal to the leak determination flow rate Qa and the pressure difference value ΔP is more than or equal to a second pressure drop determination value Pb, **characterized in that**
the gas meter (1) further comprises a display (8) and is configured to
- convert the flow rate difference value ΔQ into a code by a code conversion table,
- convert the pressure difference value ΔP into a code by a code conversion table,
- create a two-digit composite code with the obtained code of the flow rate difference value ΔQ as an upper digit and the pressure difference value ΔP as a lower digit, and
- display the composite code on the display (8).

2. The gas meter (1) according to claim 1, further comprising an operation unit (6), wherein
the leak detector (5a) is configured to start the determination in response to operation of the operation unit (6).

3. The gas meter (1) according to claim 1, further comprising a communication unit (7) configured to communicate with an outside, wherein
the leak detector (5a) is configured to start the determination in response to a message received by the communication unit (7).

4. The gas meter (1) according to claim 1, further comprising a communication unit (7) configured to communicate with an outside, wherein
the leak detector (5a) is configured to periodically start the determination at a preset time.

5. The gas meter (1) according to claim 1, wherein the leak detector (5a) is configured to determine, based on the flow rate value detected by the flow rate detector (2), a time zone when the gas is not used, and starts the determination during the time zone when the gas is not used.

## Patentansprüche

1. Ein Gaszähler (1), umfassend:
einen Durchflussdetektor (2), der dazu eingerichtet ist, einen Durchflusswert des Gases zu erfassen;
ein Absperrventil (4), das dazu eingerichtet ist, das Gas abzusperren;
einen Druckdetektor (3), der dazu eingerichtet ist, einen Druckwert des Gases zu erfassen; und
einen Leckdetektor (5a), der dazu eingerichtet ist,
- einen ersten Durchflusswert, einen ersten Druckwert und einen ersten durchschnittlichen Durchflusswert Q1 und einen ersten durchschnittlichen Druckwert P1, die Durchschnittswerte von ersten Durchflusswerten beziehungsweise ersten Druckwerten sind, zu erfassen, nachdem eine vorbestimmte Zeit seit dem Öffnen des Absperrventils (4) verstrichen ist,
- einen zweiten Durchflusswert, eines zweiten Druckwert und einen zweiten durchschnittlichen Durchflusswerts Q2 und einen zweiten durchschnittlichen Druckwerts P2, die Durchschnittswerte von zweiten Durchflusswerten beziehungsweise zweiten Druckwerten sind, zu erfassen, nachdem eine vorgegebene Zeit seit dem Schließen des Absperrventils (4) verstrichen ist,
- einen Durchflussmengen-Differenzwert ΔQ = Q2 - Q1 und einen Druckdifferenzwert ΔP = P2 - P1 zu berechnen, und
- ein Gasleck feststellen, wenn der Durchflussmengen-Differenzwert ΔQ kleiner als eine Leckbestimmungs-Durchflussmenge Qa ist und der Druckdifferenzwert ΔP größer oder gleich einem ersten Druckabfall-Bestimmungswert Pa ist oder wenn der Durchflussmengen-Differenzwert ΔQ größer oder gleich der Leckbestimmungs-Durchflussmenge Qa ist und der Druckdifferenzwert ΔP größer oder gleich einem zweiten Druckabfall-Bestimmungswert Pb ist, **dadurch gekennzeichnet, dass** der Gaszähler (1) ferner eine Anzeige (8) umfasst und dazu eingerichtet ist, um
- den Durchflussmengen-Differenzwert ΔQ mittels einer Codeumwandlungstabelle in einen Code umzuwandeln,
- den Druckdifferenzwert ΔP mittels einer Codeumwandlungstabelle in einen Code umzuwandeln,
- einen zweistelligen zusammengesetzten Codeszu erstellen mit dem erhaltenen Code des Durchflussmengen-Differenzwertes ΔQ als obere Ziffer und dem Druckdifferenzwert ΔP als untere Ziffer, und
- den zusammengesetzten Codes auf dem Display (8) anzuzeigen.

2. Der Gaszähler (1) nach Anspruch 1, ferner mit einer Bedieneinheit (6), wobei
der Leckdetektor (5a) dazu eingerichtet ist, die Bestimmung als Reaktion auf die Betätigung der Bedieneinheit (6) zu starten.

3. Der Gaszähler (1) nach Anspruch 1, der ferner eine Kommunikationseinheit (7) umfasst, die dazu eingerichtet ist, mit der Außenwelt zu kommunizieren, wobei
der Leckdetektor (5a) dazu eingerichtet ist, die Bestimmung in Reaktion auf eine von der Kommunikationseinheit (7) empfangene Nachricht zu starten.

4. Der Gaszähler (1) nach Anspruch 1, der ferner eine Kommunikationseinheit (7) umfasst, die dazu eingerichtet ist, mit der Außenwelt zu kommunizieren, wobei
der Leckdetektor (5a) dazu eingerichtet ist, die Bestimmung periodisch zu einer voreingestellten Zeit zu starten.

5. Der Gaszähler (1) nach Anspruch 1, wobei der Leckdetektor (5a) dazu eingerichtet ist, auf der Grundlage des von dem Durchflussdetektor (2) erfassten Durchflusswerts eine Zeitzone zu bestimmen, in der das Gas nicht verwendet wird, und die Bestimmung während der Zeitzone zu starten, in der das Gas nicht verwendet wird.

## Revendications

1. Compteur à gaz (1), comprenant :
un détecteur de débit (2) configuré pour détecter une valeur de débit d'un gaz ;
une soupape d'arrêt (4) configurée pour arrêter le gaz ;
un détecteur de pression (3) configuré pour détecter une valeur de pression du gaz ; et
un détecteur de fuite (5a) configuré pour
- détecter une première valeur de débit, une première valeur de pression et une première valeur de débit moyenne Q1 et une première valeur de pression moyenne P1, qui sont des valeurs moyennes de premières valeurs de débit et de premières valeurs de pression, respectivement, après qu'un temps prédéterminé s'est écoulé depuis l'ouverture de la soupape d'arrêt (4),
- détecter une seconde valeur de débit, une seconde valeur de pression et une seconde valeur de débit moyenne Q2 et une seconde valeur de pression moyenne P2, qui sont des valeurs moyennes de secondes valeurs de débit et de secondes valeurs de pression, respectivement, après qu'un temps prédéterminé s'est écoulé depuis la fermeture de la soupape d'arrêt (4),
- calculer une valeur de différence de débit ΔQ = Q2 - Q1 et une valeur de différence de pression ΔP = P2 - P1, et
- déterminer une fuite de gaz si la valeur de différence de débit ΔQ est inférieure à un débit de détermination de fuite Qa et la valeur de différence de pression ΔP est supérieure ou égale à un premier valeur de détermination de chute de pression Pa ou si la valeur de différence de débit ΔQ est supérieure ou égale au débit de détermination de fuite Qa et la valeur de différence de pression ΔP est supérieure ou égale à une seconde valeur de détermination de chute de pression Pb, **caractérisé en ce que**
le compteur à gaz (1) comprend en outre un dispositif d'affichage (8) et est configuré pour
- convertir la valeur de différence de débit ΔQ en un code par le biais d'une table de conversion de code,
- convertir la valeur de différence de pression ΔP en un code par le biais d'une table de conversion de code,
- créer un code composite à deux chiffres avec le code obtenu de la valeur de différence de débit ΔQ en tant que chiffre supérieur et la valeur de différence de pression ΔP en tant que chiffre inférieur, et
- afficher le code composite sur le dispositif d'affichage (8).

2. Compteur à gaz (1) selon la revendication 1, comprenant en outre une unité de fonctionnement (6), dans lequel
le détecteur de fuite (5a) est configuré pour commencer la détermination en réponse à un fonctionnement de l'unité de fonctionnement (6).

3. Compteur à gaz (1) selon la revendication 1, comprenant en outre une unité de communication (7) configurée pour communiquer avec un extérieur, dans lequel
le détecteur de fuite (5a) est configuré pour commencer la détermination en réponse à un message reçu par l'unité de communication (7).

4. Compteur à gaz (1) selon la revendication 1, comprenant en outre une unité de communication (7) configurée pour communiquer avec un extérieur, dans lequel
le détecteur de fuite (5a) est configuré pour périodiquement commencer la détermination à un instant prédéfini.

5. Compteur à gaz (1) selon la revendication 1, dans lequel le détecteur de fuite (5a) est configuré pour déterminer, sur la base de la valeur de débit détectée par le détecteur de débit (2), une zone temporelle pendant laquelle le gaz n'est pas utilisé, et commencer la détermination durant la zone temporelle lorsque le gaz n'est pas utilisé.
